(19) **Europäisches Patentamt**

**European Patent Office**

**Office européen des brevets**

(11) **EP 0 798 471 B1**

(12) **EUROPÄISCHE PATENTSCHRIFT**

| | |
|---|---|
| (45) Veröffentlichungstag und Bekanntmachung des Hinweises auf die Patenterteilung: **23.01.2002 Patentblatt 2002/04** | (51) Int Cl.⁷: **F15B 13/042**, F16K 27/02 |

(21) Anmeldenummer: **97103905.2**

(22) Anmeldetag: **08.03.1997**

(54) **Zwei-Wege-Einbauventil**

Two-way cartridge valve

Soupape à deux voies sous forme de cartouche

(84) Benannte Vertragsstaaten:
**AT DE FI FR GB IT SE**

(30) Priorität: **25.03.1996 LU 88732**

(43) Veröffentlichungstag der Anmeldung:
**01.10.1997 Patentblatt 1997/40**

(73) Patentinhaber: **HYDROLUX S.A.R.L.**
**1112 Luxembourg (LU)**

(72) Erfinder: **Post, Karl-Heinz, Prof. Dr.-Ing.**
**41564 Karst 1 (DE)**

(74) Vertreter: **Schmitt, Armand et al**
**Office Ernest T. Freylinger S.A. 234, route d'Arlon, B.P. 48**
**8001 Strassen (LU)**

(56) Entgegenhaltungen:
**EP-A- 0 634 577       DE-A- 4 218 325**
**DE-C- 3 741 521       GB-A- 2 162 340**

**Beschreibung**

Die Erfindung betrifft ein Zwei-Wege-Einbauventil. Sie betrifft insbesondere ein Zwei-Wege-Einbauventil mit Sperrfunktion, die hydraulisch aufgehoben werden kann.

Aufgabe eines solchen Zwei-Wege-Einbauventils ist es zum Beispiel, einen hydraulischen Verdrängerraum - wie den Anschluß eines mit einer äußeren Kraft belasteten Zylinders - leckagefrei abzusperren und damit Kriechbewegungen, beziehungsweise bei Zylinderstillstand einen Druckabbau zu verhindern. Diese Sperrfunktion muß ohne die Inanspruchnahme einer zusätzlichen externen Druckquelle selbsttätig durch den Druck im abgesperrten Verdrängerraum wirksam sein.

2/2-Wege-Einbauventtile, auch Cartridge-Ventile genannt, werden seit zirka 30 Jahren im großen Umfang in der hydraulischen Steuertechnik als Druck-, Wege- oder Sperrventile eingesetzt. Solche Cartridge-Ventile sind zum Beispiel in "Machine Design", Band 52, Nr. 28, vom 11. Dezember 1980, Cleveland USA, Seiten 143-147, in dem Artikel "Cartridge check valves: New option for hydraulic control" von David C. Downs, eingehend beschrieben. Ein 2/2-Wege-Einbauventil in Sitzbauweise wird ebenfalls in der Offenlegungsschrift DE-A-36 19 927 beschrieben.

Ein standardmäßiges 2/2-Wege-Einbauventil in Sitzbauweise (oder Cartridge-Ventil) umfaßt:

a) eine Ventilhülse zum Einsatz in einen Steuerblock, mit einem stirnseitigen Haupstrom-Anschluß A, einem seitlichen Haupstrom-Anschluß B, und einem Ventilsitz zwischen den Haupstrom-Anschlüssen A und B;

b) einen Ventilkolben, der axial verschiebbar in eine Führungsbohrung der Ventilhülse eingepaßt ist, und dessen erstes Ende einen Verschlußkegel für den Ventilsitz ausbildet;

c) eine Schließfeder, welche dem Ventilkolben derart zugeordnet ist, daß sie auf diesen in Richtung des Ventilsitzes eine Schließkraft ausübt, und

d) einen Ventildeckel der die Ventilhülse axial verschließt und eine Steuerkammer darin abgrenzt, in der das zweite Ende des Ventilkolbens eine stirnseitige Steuerfläche $A_X$ ausbildet.

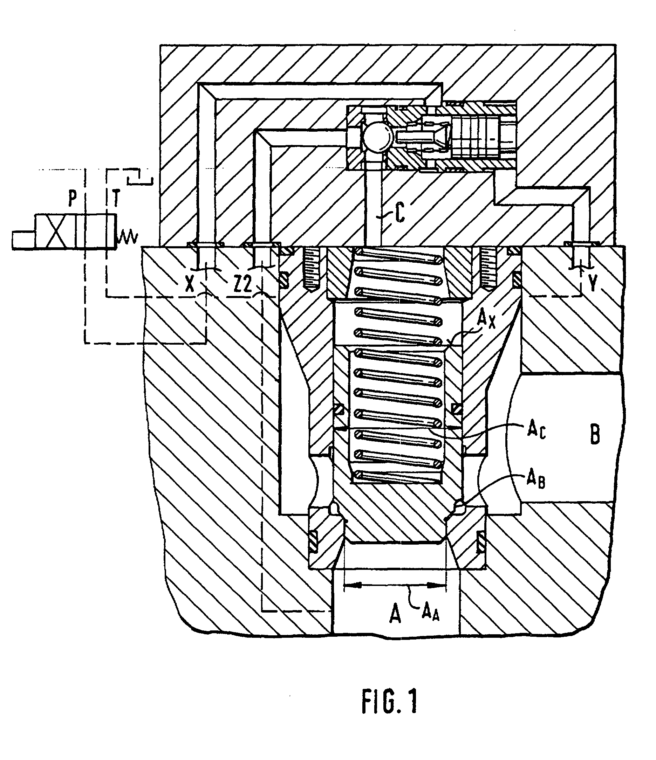

Figur 1 der beigefügten Zeichnungen zeigt ein solches standardmäßiges 2/2-Wege-Einbauventtil in einer Schaltung als entsperrbares Rückschlagventil. Um den Verschlußkegel durch den abzusperrenden Druck $p_A$ im Anschluß A zu sperren, muß die Steuerkammer über ein im Ventildeckel integriertes steuerbares Wechselventil in Sitzausführung mit dem Druck $p_A$ beaufschlagt werden. Der Ventilkolben steht unter Kräftegleichgewicht wenn folgende Gleichung erfüllt ist:

$$p_A A_A + p_B A_B = p_A A_x + F_{Feder}$$

da $A_X \approx A_A + A_B$, beträgt der Öffnungsdruck $p_B$:

$$p_B = p_A + F_{Feder}/A_B$$

Zum Entsperren wird der Steuerdruckanschluß Y mit Druck beaufschlagt, der Steuerdruckanschluß X dagegen zum Tank entlastet. Das Wechselventil im Ventildeckel verbindet die Steuerkammer jetzt drucklos über den Steuerdruckanschluß X mit dem Tank. Die auf die Sitzfläche $A_A$ und die Ringfläche $A_B$ wirkenden Druckkräfte schieben den Ventilkolben gegen die Federkraft bis zum Anschlag an den Ventildeckel und öffnen somit das Ventil. Anstelle des hier verwendeten, hydraulisch gesteuerten Wechselventils in Sitzbauweise, kann auch ein elektromagnetisch gesteuertes 3/2-Wege in Sitzbauweise eingesetzt werden. Es muß jedoch sichergestellt sein, daß im Wechselventil oder elektromagnetisch-gesteuerten 3/2-Wege-Sitzventil keine Leckagen zwischen Steuerdruckanschluß C und Z2 einerseits und dem Steuerdruckanschluß X anderseits stattfinden, ansonsten eine einwandfreie Druckhaltung im Anschluß A nicht gewährleistet ist. Nachteilig bei der in Figur 1 dargestellten Schaltung ist ebenfalls, daß der Schließvorgang gegen den Druck $p_A$, der durch Druckentlastung von Y eingeleitet wird, im wesentlichen nur durch die Schließfeder erfolgt, was zu unerwünscht langen Schließzeiten führt.

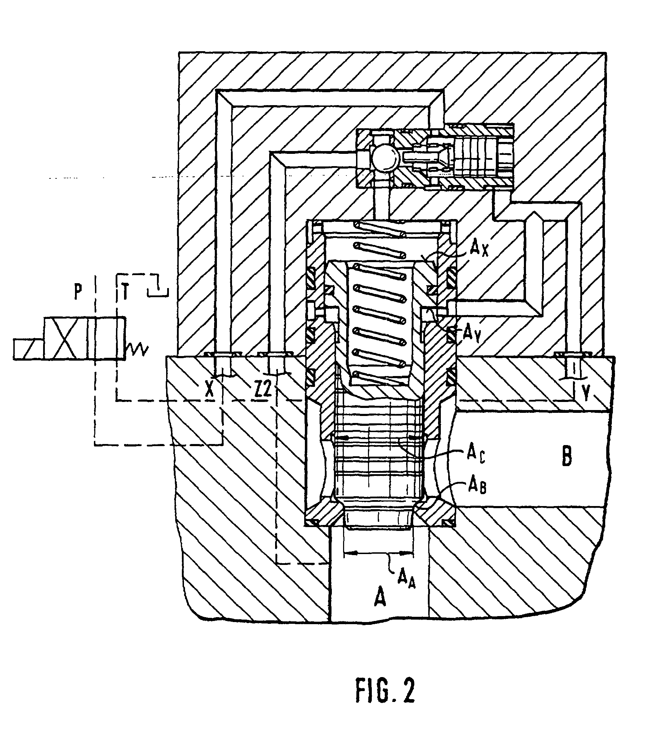

Eine wesentliche Verbesserung in Bezug auf die Schließzeiten wird durch den Einsatz von sogenannten aktiv gesteuerten 2/2-Wege-Einbauventilen nach Figur 2 erreicht. Das aktiv gesteuerte 2/2-Wege-Einbauventil der Figur 2 unterscheidet sich vom einem standardmäßigen 2/2-Wege-Einbauventtil nach Figur 1 im wesentlichen dadurch, daß die Ventilhülse eine abgestufte Führungsbohrung für einen Ventilkolben mit einem Ansatz mit vergrößerten Querschnitt $A_X$ aufweist. Dieser Ansatz des Ventilkolbens grenzt innerhalb der Führungsbohrung eine ringförmige zweite Steuerkammer ab, die mit dem Steuerdruckanschluß Y verbunden ist. In dieser zweiten Steuerkammer bildet der Ansatz des Ventilkolbens eine in Öffnungsrichtung wirkende zusätzliche ringförmige Steuerfläche $A_Y$ aus. Um den Verschlußkegel durch den abzusperrenden Druck $p_A$ im Anschluß A zu sperren, muß die stirnseitige Steuerkammer über ein im Ventildeckel integriertes steuerbares Wechselventil in Sitzausführung mit einem Steuerdruck $p_X = p_A$ beaufschlagt werden, und die zweite Steuerkammer muß zum Tank entlastet werden. Für die Schließbewegung steht demnach, neben der Federkraft, eine zusätzliche hydrostatische Druckkraft $p_A(A_X-A_C)$ zur Verfügung. Diese aktiv wirkende hydrostatische Schließkraft ermöglicht gegenüber der Lösung aus Figur 1 Schließzeitreduzierungen um den Faktor 10 und größer. Wegen der vergrößerten Steuerfläche $A_X$ und des dadurch vergrößerten Steuerölvolumens sind aber entsprechend große Durchflüsse im Pilot-Wegeventil zum Erreichen kurzer Schaltzeiten erforderlich. Wie bei der Lösung nach Figur 1 muß auch bei der Lösung nach Figur 2 sichergestellt sein, daß im Pilot-Wegeventil keine Leckagen zwischen Steuerdruckanschluß C und Z2 einerseits und dem Steuerdruckanschluß X anderseits stattfinden, ansonsten eine einwandfreie Druckhaltung im Anschluß A auf Dauer nicht gewährleistet ist.

Bei druckloser zweiter Steuerkammer steht der den Ventilsitz verschließende Ventilkolben unter Kräftegleichgewicht, wenn folgende Gleichung erfüllt ist:

$$p_A A_A + p_B A_B = p_A A_X + F_{Feder}$$

Der Öffnungsdruck $p_B$ beträgt somit:

$$p_B = p_A(A_X - A_A)/A_B + F_{Feder}/A_B$$

und ist wesentlich größer als im Ventil der Figur 1.

Durch Druckbeaufschlagung der Steuerfläche $A_Y$ und Druckentlastung der Steuerfläche $A_X$ kann der Ventilkolben aktiv bis zum oberen Endanschlag aufgesteuert werden.

Aus der EP-A-0634577 ist ein 2/2-Wege-Einbauventil als vorgesteuertes Schaltventil bekannt. Dieses Ventil unterscheidet sich vom 2/2-Wege-Einbauventil nach Figur 2 im wesentlichen dadurch, daß ein Verbindungskanal durch die Ventilhülse die ringförmige zweite Steuerkammer mit dem Anschluß B verbindet. Um einen Druck $p_A$ im Anschluß A abzusperren, wird die erste Steuerkammer mit einem Steuerdruck $p_X = p_A$ beaufschlagt. Durch den relativ zum Querschnitt des Ventilsitzes vergrößerten Querschnitt des Kolbenansatzes in der ersten Steuerkammer, wird eine hydrostatische Zuhaltekraft erzeugt, welche die Zuhaltekraft der Schließfeder ergänzt, so daß der Anschluß A sicher gegen den Druck $p_A$ abgesperrt wird. Beim Schließvorgang gegen den Druck $p_A$ in den Anschlüssen A und B ist jedoch, wie beim standardmäßigen 2/2-Wege-Einbauventil, im wesentlichen nur die Schließfeder wirksam, was zu unerwünscht langen Schließzeiten führt. Wird die erste Steuerkammer dagegen zum Tank entlastet, öffnet das vorgestellte 2/2-Wege-Schaltventil bei entsprechendem Druck im Hauptstrom-Anschluß A und/oder B gegen die Zuhaltekraft der Schließfeder und weist demnach keine eigentliche Sperrichtung auf.

In der EP-A-0634577 wird ebenfalls jeweils eine Ausführungsvariante des vorbeschriebenen 2/2-Wegeventils beschrieben, die als Rückschlagventil mit Sperrichtung von Anschluß B nach Anschluß A, beziehungsweise mit Sperrichtung von Anschluß A nach Anschluß B, eingesetzt werden kann. Soll das vorbeschriebene 2/2-Wegeventil als Rückschlagventil mit Sperrichtung von Anschluß B nach Anschluß A eingesetzt werden, so sind die erste und zweite Steuerkammer über eine Bohrung durch den Kolbenansatz miteinander zu verbinden. Ein Sperrichtung von Anschluß A nach Anschluß B wird dagegen erzielt, wenn die erste Steuerkammer über eine Bohrung des Ventilkolbens mit dem Anschluß A verbunden wird. Diese Rückschlagventile sind jedoch nicht hydraulisch entsperrbar.

Der Erfindung liegt die Aufgabe zugrunde ein Zwei-Wegeventil zu schaffen, das besser als die bekannten Zwei-Wegeventile geeignet ist, durch den abzusperrenden Druck, eine hermetische Sperrfunktion zu erzielen, die hydraulisch aufgehoben werden kann.

Diese Aufgabe wird durch ein Ventil nach Anspruch 1 gelöst.

Ein erfindungsgemäßes Zwei-Wege-Ventil unterscheidet sich von einem Zwei-Wege-Ventil nach Figur 2 im wesentlichen durch einen Hilfskolben, der in eine innere Führungsbohrung des Kolbenansatzes derart eingepaßt ist, daß der Ventilkolben relativ zum Hilfskolben axial verschiebbar ist, und daß diese innere Führungsbohrung durch den Hilfskolben axial abgedichtet wird. Der Querschnitt $A_S$ der inneren Führungsbohrung ist gleich groß wie oder größer als der abgedichtete Querschnitt $A_C$ der ersten Stufe der Stufenbohrung, und der Kolbenansatz bildet in der ersten Steuerkammer eine ringförmige Druckfläche $A_X$ aus. Eine Verbindungsbohrung durch den Ventilkolben verbindet die innere Führungsbohrung mit einer Einmündung in der Stirnfläche des Ventilkolbens. Durch diese Verbindungsbohrung kann sich der abzusperrende Druck $p_A$ unmittelbar in der inneren Führungsbohrung aufbauen, die durch den Hilfskolben hermetisch abgedichtet ist. Dieser Druck erzeugt eine in Schließrichtung auf den Ventilkolben wirkende hydrostatische Sperrkraft, die proportional zur Fläche $(A_S - A_A)$ ist und die die Sperrkraft der Feder unterstützt. Ist $A_C = A_S$, so ist der Ventilkolben beim Schließvorgang hydrostatisch ausgeglichen, und die Schließfeder muß keine Druckkraft überwinden. Ist $A_C < A_S$, wirkt beim Schließvorgang eine hydrostatische Schließkraft $p_A(A_S - A_C)$ auf den Ventilkolben, welche die Schließfeder unterstützt. Durch Druckbeaufschlagung der ersten Steuerkammer läßt sich eine zusätzliche hydrostatische Schließkraft erzeugen, und somit zum Beispiel die Schließgeschwindigkeit wesentlich vergrößern, bzw. die hydrostatische Sperrkraft erhöhen. Da der Kolbenansatz in der ersten Steuerkammer lediglich eine ringförmige Druckfläche $A_X$ ausbildet, ist der Steuerölverbrauch zum axialen Verschieben des Ventilkolbens in Schließrichtung kleiner als in der Ventilausführung nach Figur 2. Durch Druckbeaufschlagung der zweiten Steuerkammer, läßt sich dagegen eine hydrostatische Öffnungskraft zum sicheren Öffnen des Ventils erzeugen.

Ein hydraulisch-entsperrbares Ventil mit geringem Druckverlust im Ventilsitz erhält man, wenn der abgedichtete Querschnitt $A_C$ der ersten Stufe der Stufenbohrung nur unwesentlich größer als der abgedichtete Querschnitt $A_A$ des Ventilsitzes gewählt wird. Da mit diesem Ventil keine Funktion eines Rückschlagventils erzielt werden kann, kommt es zum Beispiel in hydraulischen Steuerungen zum Einsatz, in denen die Entsperrung ausschließlich durch ein Pilot-Wegeventil bewirkt wird, das die erste und zweite Steuerkammer ansteuert.

Ein hydraulisch-entsperrbares Ventil mit Funktion eines Rückschlagventils mit Durchgangsrichtung von B nach A erhält man, wenn der abgedichtete Querschnitt $A_C$ der ersten Stufe der Stufenbohrung um eine Ringfläche $A_B$ größer als der abgedichtete Querschnitt $A_A$ des Ventilsitzes gewählt wird, so daß das Ventil bei einer vorgegebenen Druckdifferenz $p_B-p_A > 0$ öffnet.

Die Schließfeder ist vorteilhaft zwischen Ventilkolben und Hilfskolben eingespannt, und der Hilfskolben wird durch die Schließfeder gegen den Ventildeckel gedrückt. Der Hilfskolben wird hierbei mit radialem und axialem Spiel derart am Ventildeckel befestigt, daß er die nötige Bewegungsfreiheit zum Selbstzentrieren in der inneren Führungsbohrung aufweist. Es sind demnach keine kostenintensive Mehrfacheinpassungen am Ventilkolben nötig. Es entstehen darüber hinaus keine Klemmkräfte während der Öffnungs- und Schließbewegung, da der Hilfskolben sich sowohl bei Druckbeaufschlagung der inneren Führungsbohrung als auch bei Druckbeaufschlagung der ersten Steuerkammer selbsttätig zur Achse des Ventilkolbens zentrieren kann.

Die beigefügten Zeichnungen zeigen:

- Figur 1, zur Veranschaulichung des vorbeschriebenen Stands der Technik, einen Schnitt durch ein standardmäßiges Zwei-Wege-Einbauventil, in einer Schaltung als entsperrbares Rückschlagventil;
- Figur 2, zur Veranschaulichung des vorbeschriebenen Stands der Technik, einen Schnitt durch ein aktiv gesteuertes Zwei-Wege-Einbauventil, in einer Schaltung als entsperrbares Rückschlagventil;
- Figur 3, zur Veranschaulichung der Erfindung, einen Schnitt durch eine erste Ausführung des erfindungsgemäßen Zwei-Wege-Einbauventils, in einer Schaltung als hydraulisch-entsperrbares Ventil mit Funktion eines Rückschlagventils mit Durchgangsrichtung von B nach A;
- Figur 4, zur Veranschaulichung der Erfindung, einen Schnitt durch eine zweite Ausführung des erfindungsgemäßen Zwei-Wege-Einbauventils in einer Schaltung als hydraulisch-entsperrbares Ventil ohne die Funktion eines Rückschlagventils mit Durchgangsrichtung von B nach A.

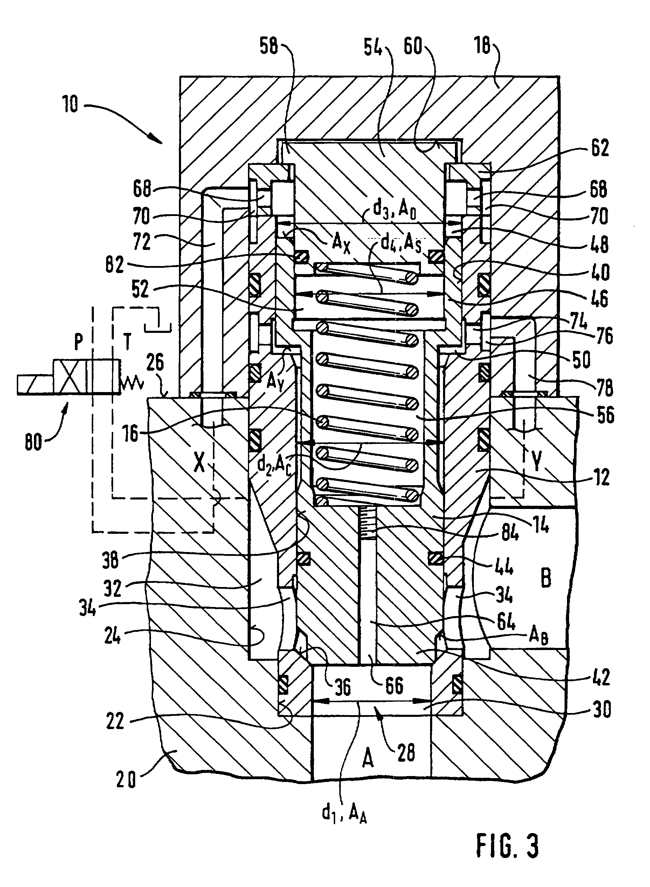

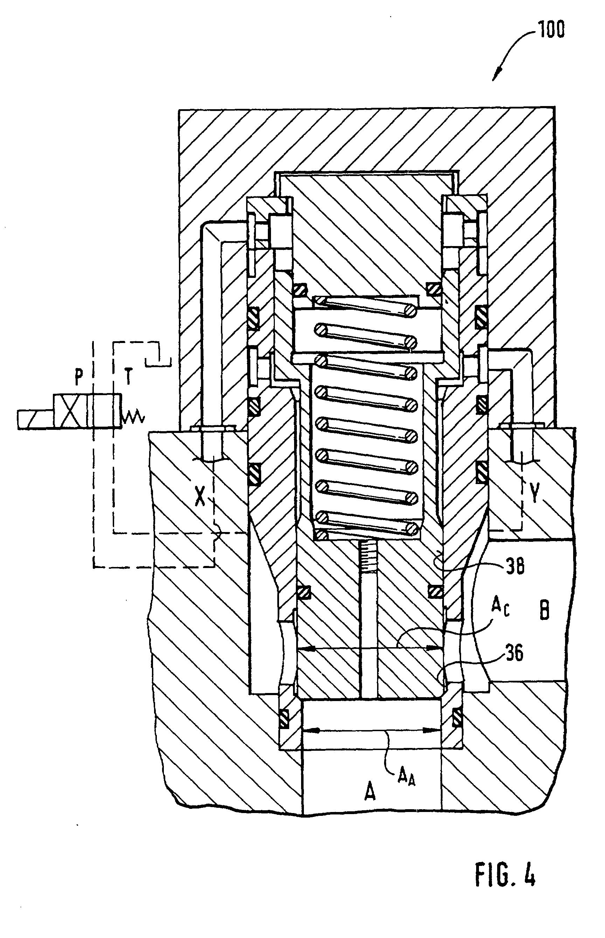

Zum besseren Verständnis der Erfindung werden im folgenden die Ausführungsbeispiele der Figuren 3 und 4 näher beschrieben.

Der Grundaufbau eines erfindungsgemäßen Zwei-Wege-Einbauventil wird anhand der Figur 3 beschrieben. Das Ventil 10 umfaßt im wesentlichen eine Ventilhülse 12, einen Ventilkolben 14, eine Schließfeder 16 und einen Ventildeckel 18. Der untere Teil der Ventilhülse 12 ist abgedichtet in eine Stufenbohrung 22, 24 eines Steuerblocks 20 eingesetzt. Ein erster Hauptstrom-Anschluß A mündet im Steuerblock 20 koaxial in die erste Bohrungsstufe 22. Ein zweiter Hauptstrom-Anschluß B mündet im Steuerblock 20 seitlich in die zweite Bohrungsstufe 24. Der obere Teil der Ventilhülse 12 ist abgedichtet in eine Bohrung im Ventildeckel 18 eingesetzt. Letzterer wird auf einer Anschlußoberfläche 26 des Steuerblocks 20 befestigt.

Eine axiale erste Hauptstromöffnung 28 (auch mit Hauptstromöffnung A bezeichnet) befindet sich stirnseitig im ersten Ende der Ventilhülse 12 und wird durch einen axialen Hauptstromkanal 30 in die Ventilhülse 12 hinein verlängert. In der zweiten Bohrungsstufe 24 des Steuerblocks 20 grenzt die Ventilhülse 12 eine Ringkammer 32 ab, die über seitliche Hauptstromöffnungen 34 (auch noch Hauptstromöffnung B bezeichnet) in der Ventilhülse 12 mit dem Hauptstromkanal 30 verbunden ist. Ein Ventilsitz 36 mit Sitzfase ist im Hauptstromkanal 30 zwischen der axialen ersten Hauptstromöffnung 28 und den seitlichen zweiten Hauptstromöffnungen 34 angeordnet.

Eine erste Führungsbohrung 38 für den Ventilkolben 14 erstreckt sich oberhalb der Hauptstromöffnungen 34 in Richtung des zweiten Endes der Ventilhülse 12. Sie wird axial durch eine zweite Führungsbohrung 40 mit wesentlich größerem Querschnitt bis zur zweiten Stirnseite der Ventilhülse 12 verlängert.

Der Ventilkolben 14 ist als Stufenkolben ausgeführt, der in die Stufenbohrung der Ventilhülse 12 axial verschiebbar eingepaßt ist. Das dem Ventilsitz 36 zugekehrte Ende des Ventilkolbens 14 bildet ein Verschlußelement 42 für den Ventilsitz 36 aus. Der in der Figur eingetragene Querschnitt $A_A$ ist der Querschnitt des Ventilsitzes 36 den das Verschlußelement 42 in Richtung Haupstromöffnung A hin abdichtet. In der ersten Führungsbohrung 38 ist der Kolben zu den Hauptstromöffnungen (28, 34) hin durch ein Abdichtelement 44 abgedichtet. In Figur 1 ist der in der ersten Führungsbohrung 38 abgedichtete Querschnitt $A_C$ um die Ringfläche $A_B$ größer als der abgedichtete Querschnitt $A_A$ des Ventilsitzes 36.

Am seinem zweiten Ende weist der Ventilkolben 14 einen Kolbenansatz 46 auf, der die zweite Stufe 40 der Führungsbohrung axial in eine erste Steuerkammer 48 und eine zweite Steuerkammer 50 unterteilt. Diese zweite Stufe 40 kann einen um zirka 60% - 100% größeren Querschnitt aufweisen als die erste Stufe 38. Die maximale Querschnittserweiterung wird hierbei durch die Mindestwandstärke der Ventilhülse 12 festgelegt. In Figur 1 ist der abgedichtete Querschnitt der zweiten Stufe 40 mit $A_D$ bezeichnet.

Der Kolbenansatz 46 weist eine innere Führungsbohrung 52 auf, in die ein Hilfskolben 54 derart eingepaßt ist, daß der Ventilkolben 14 relativ zum Hilfskolben 54 axial verschiebbar ist, und daß die innere Führungsbohrung 52 durch den Hilfskolben 54 axial hermetisch abgedichtet wird. Der vom Hilfskolben 54 abgedichtete Querschnitt $A_S$ dieser inneren Führungsbohrung 52 ist gleich groß wie oder, je nach Anwendung, leicht größer als der vom Ventilkolben 14 abgedichtete Querschnitt $A_C$ der ersten Stufe.

Die Schließfeder 16 ist dem Ventilkolben 14 derart zugeordnet, daß sie auf diesen in Richtung des Ventilsitzes 36 eine Schließkraft ausübt. Diese Schließfeder 16 ist vorteilhaft zwischen Ventilkolben 14 und Hilfskolben 54 eingespannt, so daß der Hilfskolben 54 durch die Schließfeder 16 gegen den Ventildeckel 18 gedrückt wird und sich an diesem abstützt. Um eine genügend lange Schließfeder 16 im Ventilkolben 14 unterbringen zu können, ist die innere Führungsbohrung 52 in Richtung Verschlußelement 42 durch eine Federkammer 56 verlängert. Der Hilfskolben 54 weist einen zylindrischen Ansatz 58 auf, der mit radialem Spiel in eine zylindrische Kammer 60 des Ventildeckels 18 eingepaßt ist und der durch einen Ringflansch 62 mit axialem Spiel in der zylindrischen Kammer 60 gesichert ist. Der Ringflansch 62 selbst ist zwischen Ventildeckel 18 und Ventilhülse 12 eingespannt. Bei dieser Befestigungsart des Hilfskolbens 54 am Ventildeckel 18 weist der Hilfskolben 54 eine Bewegungsfreiheit zum Selbstzentrieren in der inneren Führungsbohrung 52 auf.

Eine Verbindungsbohrung 64 durch den Ventilkolben 14 verbindet die innere Führungsbohrung 52 hydraulisch mit einer zentralen Einmündung 66 in der Stirnfläche des Verschlußelementes 42, so daß zwischen Führungskammer 52 und Hauptstrom-Anschluß A stets ein Druckausgleich stattfindet.

In der ersten Steuerkammer 48 bildet der Kolbenansatz 46 eine ringförmige, in Schließrichtung wirkende Druckfläche $A_X$ aus, wobei $A_X = A_D-A_S$. Diese erste Steuerkammer 48 ist über Verbindungsöffnungen 68 im Ringflansch 62 und einen Ringkanal 70 mit einem ersten Steuerdruckanschluß 72 im Ventildeckel 18 verbunden. Dieser erste Steuerdruckanschluß 72 wird nachfolgend mit "Steuerdruckanschluß X" bezeichnet.

In der zweiten Steuerkammer 50 bildet der Kolbenansatz 46 eine ringförmige, in Öffnungsrichtung wirkende Druckfläche $A_Y$ aus, wobei $A_Y = A_D-A_C$. Diese zweite Steuerkammer 50 ist über Verbindungsöffnungen 74 in der Ventilhülse 12 und einen Ringkanal 76 mit einem zweiten Steuerdruckanschluß 78 im Ventildeckel 18 verbunden. Dieser zweite Steuerdruckanschluß 78 wird nachfolgend mit "Steuerdruckanschluß Y" bezeichnet. In Figur 3 dichtet der Kolbenansatz 46 die beiden Steuerkammern 48 und 50 metallisch gegeneinander ab, es könnte jedoch auch ein Dichtelement zwischen Führungskammer 52 und Kolbenansatz 46 eingebaut werden. Eine hermetische Abdichtung zwischen den beiden Steuerkammern 48 und 50 ist jedoch in den meisten Fällen nicht erfordert. Die Steuerdruckanschlüsse X und Y sind über Blockbohrungen mit einem entsprechenden Pilotventil, wie zum Beispiel ein 4/2-Wege-Schaltventil 80 verbunden, an das ebenfalls keine besonderen Anforderungen hinsichtlich der Leckagen zwischen den einzelnen Anschlüssen gestellt werden.

Bei drucklosen Steuerdruckanschlüssen X und Y arbeitet das Ventil 10 der Figur 3 als Rückschlagventil mit Durchgangsrichtung von B nach A. Der Druck $p_A$ im Haupstrom-Anschluß A erzeugt dabei eine hydrostatische Schließkraft $p_A(A_S-A_A)$, die das Ventil von A nach B sperrt, da $A_S > A_A$. Der Ventilkolben 14 wird um so fester gegen den Ventilsitz 36 gedrückt je größer $p_A$ ist. Ein Dichtelement 82 dichtet den Hilfskolben 54 in der inneren Führungsbohrung 52 hermetisch ab und verhindert somit einen Druckabbau über den Steuerdruckanschluß X. Der Ventilkolben 14 sperrt sich selbsttätig durch den unmittelbaren Druckausgleich zwischen Anschluß A und inneren Führungskammer 52. Im Gegensatz zu den Schaltungen der Figuren 1 und 2, braucht kein Sitzventil als Schaltventil 80 vorgesehen zu werden, da Leckagen im Schaltventil 80 keinen Einfluß mehr auf die Druckhaltung im Anschluß A ausüben.

Bei drucklosen Steuerkammern 48 und 50 steht der den Ventilsitz 36 verschließende Ventilkolben 14 unter Kräftegleichgewicht wenn folgende Gleichung erfüllt ist:

$$p_A A_A + p_B A_B = p_A A_S + F_{Feder}$$

Der Öffnungsdruck $p_B$ beträgt somit:

$$p_B = p_A(A_S-A_A)/A_B + F_{Feder}/A_B$$

Dieser Öffnungsdruck ist in jedem Fall kleiner als der Öffnungsdruck im Ventil der Figur 2, da $A_S < A_D$.

Falls $A_S \approx A_C \approx A_A+A_B$:

$$p_B \approx p_A + F_{Feder}/A_B,$$

das heißt, der Öffnungsdruck ist ungefähr gleich dem Öffnungsdruck im Ventil der Figur 1.

Falls $p_A = 0$, wird der Ventilkolben 14 ausschließlich durch die Schließfeder 16 gegen den Ventilsitz 36 gedrückt, und der Öffnungsdruck $p_B$ im Haupstrom-Anschluß B beträgt $p_B = F_{Feder}/A_B$.

Im Gegensatz zu konventionellen hydraulisch-entsperrbaren Rückschlagventilen, kann das Ventil nach Figur 3 durch Druckbeaufschlagung des Steuerdruckanschlusses X und Entlastung des Steuerdruckanschlusses Y zum Tank in beiden Durchflußrichtungen gesperrt werden. Der Steuerdruck $p_X$ wirkt hierbei auf die Ringfläche $A_X$ in der ersten Steuerkammer 48 und baut eine zusätzliche, hydrostatisch wirkende Schließkraft auf. Damit der Hilfskolben 54 bei einem gegenüber $p_A$ erhöhten Steuerdruck $p_X$ nicht in die innere Führungsbohrung 52 eingefahren werden kann, wird diese axiale Bewegung durch den Ringflansch 62 verhindert. Dadurch ist nur die Ringfläche $A_X$ wirksam und es ergibt sich ein gegenüber dem Stand der Technik deutlich verringertes Steuerölvolumen, welches kürzere Schließzeiten, bzw. kleinere Steueröldurchflüsse, d.h. kleinere Schaltventile zur Folge hat. Ohne Ringflansch 62 würde der Hilfskolben 54 bei gegenüber $p_A$ erhöhtem Steuerdruck $p_X$ bis zum Anschlag in die innere Führungsbohrung 52 des Ventilkolbens 14 einfahren und ebenfalls die Schließbewegung unterstützen. Hierdurch würde zwar ein geringerer Steuerdruck $p_X$ benötigt, jedoch würde sich das Steuerölvolumen auf die gleichen Werte wie beim aktiv gesteuerten 2/2-Wege-Einbauventil nach Figur 2 vergrößern.

Durch Druckbeaufschlagung des Steuerdruckanschlusses Y und Entlastung des Steuerdruckanschlusses X zum Tank wird das Ventil hydraulisch aufgesteuert. Einem Kräftegleichgewicht am Ventilkolben 14 entspricht hierbei folgende Gleichung:

$$p_Y A_Y + p_A A_A + p_B A_B = p_A A_S + F_{Feder}$$

$$\Rightarrow p_Y A_Y = p_A(A_S - A_A) - p_B A_B + F_{Feder}$$

das heißt, wenn

$$p_B = 0$$

und

$$n = (A_S - A_A)/A_Y:$$

$$\Rightarrow p_Y = p_A/n + F_{Feder}/A_Y$$

Das Flächenverhältnis "n" ist im Normalfall ungefähr gleich drei oder sogar größer als drei, so daß das Ventil mit einem gegenüber $p_A$ niedrigeren Druck $p_Y$ aufgesteuert werden kann.

Um beim Aufsteuern ein schlagartiges Öffnen des Ventils 10 zu vermeiden und somit Entspannungsschläge zu verhindern, kann in die Verbindungsbohrung 64 durch den Ventilkolben 14 eine Düse eingeschraubt werden. Hierzu weist diese Verbindungsbohrung 64 vorteilhaft ein Innengewinde 84 auf. Eine solche Düse verlangsamt ebenfalls die Schließbewegung des Ventilkolbens 14.

Das 2/2-Wege-Einbauventil nach Figur 3 besitzt somit in idealer Weise alle erforderlichen Funktionen eines hydraulisch entsperrbaren Rückschlagventils. Bei gleichen Außenabmessungen sind die freien Strömungsquerschnitte im geöffneten Zustand, verglichen mit bekannten hydraulisch-entsperrbaren Rückschlagventilen, wesentlich größer. Bei gleichen Druckverlusten im Ventil sind somit entsprechend höhere Druchflüsse erreichbar. Darüber hinaus sind erweiterte Funktionen wie Sperren und vollständiges Öffnen für beide Durchflußrichtungen möglich. Die Ansteuerung der Steuerdruckanschlüsse kann hierbei durch einfache leckagebehaftete Pilot-Wegeventile in Kolbenschieberausführung erfolgen, so daß Sitzventile im Pilotkreis nicht mehr erfordert sind. Weiterhin ist die Volumenänderung der ersten Steuerkammer beim Auf- und Zufahren des Ventils wesentlich kleiner als beim aktiv gesteuerten Ventil der Figur 2, so daß kleinere Steuerölvolumina zum aktiven Sperren des Ventils benötigt werden.

Das 2/2-Wege-Einbauventil 100 der Figur 4 unterscheidet sich vom 2/2-Wege-Einbauventil 10 der Figur 3 einzig und allein dadurch, daß die Ringfläche $A_B$ gleich Null oder vernachlässigbar klein ist. In anderen Worten, der in der ersten Führungsbohrung 38 abgedichtete Querschnitt $A_C$ ist ungefähr gleich groß wie der abgedichtete Querschnitt $A_A$ des Ventilsitzes 36. Ein 2/2-Wege-Einbauventil nach Figur 4 erfüllt demnach nicht mehr die Funktion eines Rückschlagventils mit Durchgangsrichtung von B nach A. Im Unterschied zum Ventil der Figur 3 ist der Sitzquerschnitt $A_A$ jedoch annähernd auf die Fläche $A_C$ vergrößert. Durch den vergrößerten Sitzquerschnitt $A_A$ ergeben sich wesentlich verringerte Strömungswiderstände, bzw. größere Druchflüsse bei vorgegebener Druckdifferenz. Das Ventil nach Figur 4 kommt bevorzugt in hydraulischen Steuerungen zum Einsatz, in denen die Ventilschaltzustände *offen* oder *geschlossen* nur durch ein elektromagnetisches Pilot-Wegeventil bestimmt werden sollen. Es weist hierbei im wesentlichen die gleichen Vorteile auf, die oben für das Ventil nach Figur 3 beschrieben wurden.

## Patentansprüche

1. Zwei-Wege-Einbauventil umfassend:

   a) eine Ventilhülse (12) mit

      einem axialen Haupstromkanal (30), welcher in einem ersten Ende der Ventilhülse (12) eine erste Haupstromöffnung (28) ausbildet,

      einer seitlichen zweiten Hauptstromöffnung (34) in den Haupstromkanal (30),

      einem Ventilsitz (36) zwischen der ersten und zweiten Hauptstromöffnung (28 und 34), und

      einer zweistufigen Führungsbohrung (38, 40);

   b) einen Ventilkolben (14), der axial verschiebbar und abgedichtet in die zweistufige Führungsbohrung (38, 40) der Ventilhülse (12) eingepaßt ist, mit

      einem Verschlußelement (42) für den Ventilsitz (36), das an einem ersten Ende des Ventilkolbens (14) angeordnet ist,

einem Kolbenansatz (46), der am zweiten Ende des Ventilkolbens (14) angeordnet ist und die zweite Stufe (40) der Führungsbohrung axial in eine stirnseitige erste Steuerkammer (48) und eine ringförmige zweite Steuerkammer (50) unterteilt,

wobei der vom Ventilkolben (14) in der ersten Stufe (38) der Stufenbohrung abgedichtete Querschnitt $A_C$ ungefähr gleich groß wie oder größer als der vom Verschlußelement (42) im Ventilsitz (36) abgedichtete Querschnitt $A_A$ des Ventilsitzes 36 ist, und der vom Kolbenansatz (46) in der zweiten Stufe (40) der Stufenbohrung abgedichtete Querschnitt $A_D$ größer als der abgedichtete Querschnitt $A_C$ der ersten Stufe (38) ist;

c) eine Schließfeder (16), welche dem Ventilkolben (14) derart zugeordnet ist, daß sie auf diesen in Richtung des Ventilsitzes (36) eine Schließkraft ausübt;

d) einen Ventildeckel (18), welcher der Ventilhülse (12) derart zugeordnet ist, daß er die erste Steuerkammer (48) axial verschließt;

**gekennzeichnet**

**durch** einen Hilfskolben (54), der in eine innere Führungsbohrung (52) des Kolbenansatzes (46) derart eingepaßt ist, daß der Ventilkolben (14) relativ zum Hilfskolben (54) axial verschiebbar ist, und daß die innere Führungsbohrung (52) durch den Hilfskolben (54) axial abgedichtet wird, wobei der abgedichtete Querschnitt $A_S$ der inneren Führungsbohrung (52) ungefähr gleich groß wie oder größer als der abgedichtete Querschnitt $A_C$ der ersten Stufe (38) der Stufenbohrung ist, und der Kolbenansatz (46) in der ersten Steuerkammer (48) eine ringförmige Druckfläche $A_X$ ausbildet, und **durch** eine Verbindungsbohrung (64) durch den Ventilkolben (14), welche die innere Führungsbohrung (52) mit einer Einmündung in den ersten Ende des Ventilkolbens (14) verbindet.

2. Ventil nach Anspruch 1, **dadurch gekennzeichnet, daß** der abgedichtete Querschnitt $A_C$ der ersten Stufe (38) der Stufenbohrung nur unwesentlich größer als der abgedichtete Querschnitt $A_A$ des Ventilsitzes (36) ist.

3. Ventil nach Anspruch 1, **dadurch gekennzeichnet, daß** der abgedichtete Querschnitt $A_C$ der ersten Stufe (38) der Stufenbohrung um eine Ringfläche $A_B$ größer als der abgedichtete Querschnitt $A_A$ des Ventilsitzes (36) gewählt wird, so daß das Ventil (10) bei einer vorgegebenen Druckdifferenz $p_B$-$p_A$ > 0 zwischen den ersten und zweiten Hauptströmöffnungen (28 und 34) öffnet.

4. Ventil nach einem der Ansprüche 1 bis 3, **dadurch gekennzeichnet, daß** die Schließfeder (16) in der inneren Führungsbohrung (52) zwischen Ventilkolben (14) und Hilfskolben (54) eingespannt ist, und der Hilfskolben (54) durch die Schließfeder (16) gegen den Ventildeckel (18) gedrückt wird.

5. Ventil nach einem der Ansprüche 1 bis 4, **dadurch gekennzeichnet, daß** der Hilfskolben (54) mit radialem und axialem Spiel derart am Ventildeckel (18) befestigt ist, daß er die nötige Bewegungsfreiheit zum Selbstzentrieren in der inneren Führungsbohrung (52) aufweist.

6. Ventil nach Anspruch 5, **dadurch gekennzeichnet, daß** der Hilfskolben (54) einen zylindrischen Ansatz (58) aufweist, der mit radialem Spiel in eine zylindrische Kammer (60) des Ventildeckels (18) eingepaßt ist und durch einen Ringflansch (62) axial in der zylindrischen Kammer (60) des Ventildeckels (18) gesichert ist.

7. Ventil nach Anspruch 6, **dadurch gekennzeichnet, daß** der Ringflansch (62) zwischen Ventildeckel (18) und Ventilhülse (12) eingespannt ist.

8. Ventil nach einem der Ansprüche 1 bis 7, **dadurch gekennzeichnet, daß** die Verbindungsbohrung (64) durch den Ventilkolben (14) ein Innengewinde für eine einschraubare Düse aufweist.

9. Ventil nach einem der Ansprüche 1 bis 8, **dadurch gekennzeichnet, daß** das Flächenverhältnis:

$$n = (A_S - A_A)/A_Y$$

ungefähr gleich drei ist oder größer als drei ist, wobei: $A_Y = A_D - A_C$.

**Claims**

1. Two-way cartridge valve comprising

   a) a valve sleeve (12) with

      an axial mainflow duct (30), which forms a main flow opening (28) in the first end of the valve sleeve (12), a lateral second mainflow opening (34) into the main flow duct (30), a valve seat (36) between the first and second main flow opening (28 and 34),
a two-stage guide hole (38, 40);

b) a valve piston (14), which is fitted so as to be axially movable and sealed in the two-step guide hole (38, 40) of valve sleeve (12), with

a closing element (42) for the valve seat (36), which is arranged on the first end of the valve piston (14),
a piston shoulder (46), which is arranged on the second end of valve piston (14) and divides the second step (40) of the guide hole axially into an end first control chamber (48) and an annular second control chamber (50),
the cross-section Ac sealed by the valve piston (14) in the first step (38) of the stepped hole being larger than the cross section $A_A$ of valve seat (36) sealed by the closing element (42) in the valve seat (36) and the cross-section $A_D$ sealed by the piston shoulder (46) in the second step (40) of the stepped hole larger than the sealed cross-section $A_C$ of the first step (38).

c) a closing spring (16), which is assigned to the valve piston (14) in such a way that it exerts a closing force on the latter in the direction of the valve seat 36,
d) a valve cover (18), which is assigned to the valve sleeve (12) in such a way that it axially closes the first control chamber (48).

**characterised in that**

an auxiliary piston (54), which is fitted in an inner guide hole (52) of the piston shoulder (46) in such a way that the valve piston (14) can be moved axially in relation to the auxiliary piston (54) and that the inner guide hole (52) is axially sealed by the auxiliary piston (54), the cross-section $A_S$ of the inner guide hole (52) being the same size as or larger than the sealed cross-section $A_C$ of the first step (38) of the stepped hole, and the piston shoulder (46) forms an annular pressure area $A_X$ in the first control chamber (48),

a connecting hole (64) through the valve piston (14), which links the inner guide hole (52) to an orifice in the first end of the valve piston (14).

2. Two-way cartridge valve according to claim 1, **characterised in that** the sealed cross-section $A_C$ of the first step (38) of the stepped hole is only insignificantly larger than the sealed cross-section $A_A$ of the valve seat (36).

3. Two-way cartridge valve according to claim 1, **characterised in that** the sealed cross-section $A_C$ of the first step (38) of the stepped hole is larger than the sealed cross-section $A_A$ of the valve seat (36) by an annular area $A_B$, so that the valve (10) opens at a pre-determined pressure differential $p_B - p_A > 0$ between the first and second main flow openings (28 and 34).

4. Two-way cartridge valve according to one of claims 1 to 3, **characterised in that** the closing spring (16) is clamped in the inner guide hole (52) between valve piston (14) and auxiliary piston (54) and the auxiliary piston (54) is pressed by the closing spring (16) against the valve cover (18).

5. Two-way cartridge valve according to one of claims 1 to 4, **characterised in that** the auxiliary piston (54) is secured with radial and axial play to the valve cover (18) in such a way that it has the required freedom of movement for self-centering in the inner guide hole (52).

6. Two-way cartridge valve according to claim 5, **characterised in that** the auxiliary piston (54) has a cylindrical shoulder (58), which is fitted with radial play in a cylindrical chamber (60) of the valve cover (18) and is secured axially in the cylindrical chamber (60) of the valve cover (18) by an annular flange (62).

7. Two-way cartridge valve according to claim 6, **characterised in that** the annular flange (62) is clamped between valve cover (18) and valve sleeve (12).

8. Two-way cartridge valve according to one of claims 1 to 7, **characterised in that** the connecting hole (64) through the valve piston (14) has an inner thread for a screw-in nozzle.

9. Two-way cartridge valve according to one of claims 1 to 3, **characterised in that** the area ratio

$$n = (A_S - A_A) / A_Y$$

is approximately three or greater than three, whereby $A_Y = A_D - A_C$.

## Revendications

1. Soupape à deux voies sous forme de cartouche, comprenant

a) une gaine de soupape (12) présentant

un conduit axial (30) pour le passage du courant principal, formant, à une première extrémité de la gaine (12) de la soupape, un premier orifice (28) pour le passage du courant principal,

un second orifice (34) latéral pour le passage du courant principal, lequel débouche dans le conduit (30) du courant principal,

un siège de soupape (36) situé entre le premier et le second orifice (28 et 34) pour le passage du courant principal et

un perçage de guidage à deux étages (38, 40);

b) un piston à soupape (14) qui, est ajouté de façon axialement déplaçable et étanche dans le perçage de guidage à deux étages (38, 40) de la gaine (12) de la soupape, présentant

un élément d'obturation (42) du siège (36) de la soupape, situé à une première extrémité du piston (14) de la soupape,

un épaulement (46) du piston, situé à la seconde extrémité du piston (14) de la soupape et compartimentant axialement le second étage (40) du perçage de guidage en une première chambre pilote (48) du côté frontal et une seconde chambre pilote (50) en forme d'anneau,

la section transversale Ac, obturée par le piston (14) de la soupape dans lé premier étage (38) du perçage étagé, ayant à peu près la même mesure ou étant supérieure à la section transversale $A_A$ du siège (36) de la soupape, obturée par l'élément d'obturation (42) placé dans le siège (36) de la soupape, et la section transversale $A_D$ du second étage (40) du perçage étagé, obturée par l'épaulement (46) du piston, étant supérieure à la section transversale obturée $A_C$ du premier étage (38);

c) un ressort de fermeture (16) positionné de manière telle par rapport au piston (14) de la soupape qu'il exerce une force de fermeture en direction du siège (36) de la soupape;

d) un couvercle de soupape (18) positionné de manière telle par rapport à la gaine (12) de la soupape qu'il obture la première chambre pilote (48) en direction axiale,

**caractérisée**

**par** un piston auxiliaire (54) encastré de manière telle dans un perçage de guidage (52) intérieur de l'épaulement (46) du piston que le piston (14) de la soupape peut se déplacer axialement relativement au piston auxiliaire (54) et que le piston auxiliaire (54) sert à obturer le perçage de guidage intérieur (52) en direction axiale, la section transversale obturée $A_S$ du perçage de guidage intérieur (52) ayant à peu près la même mesure ou étant supérieure à la section transversale obturée $A_C$ du premier étage (38) du perçage étagé et l'épaulement (46) du piston formant une surface de pression $A_X$ en forme d'anneau dans la première chambre pilote (48) et
par un perçage de raccordement (64) aménagé dans le piston (14) de la soupape, reliant le perçage de guidage (52) à une embouchure au niveau de la première extrémité du piston (14) de la soupape.

2. Soupape selon la revendication 1, **caractérisée en ce que** la section transversale obturée $A_C$ du premier étage (38) du perçage étagé n'est qu'à peine supérieure à la section transversale obturée $A_A$ du siège (36) de la soupape.

3. Soupape selon la revendication 1, **caractérisée en ce que** la section transversale obturée $A_C$ du premier étage (38) du perçage étagé est choisie de façon à dépasser d'une surface annullaire $A_B$ la section transversale obturée $A_A$ du siège (36) de la soupape de sorte que la soupape (10) s'ouvre pour une différence de pression prédéfinie $P_B - P_A > 0$ entre le premier et le second orifice pour le passage du courant principal (28 et 34).

4. Soupape selon l'une des revendications de 1 à 3, **caractérisée en ce que** le ressort de fermeture (16) est monté dans le perçage de guidage intérieur (52) entre le piston (14) de la soupape et le piston auxiliaire (54) et que le ressort de fermeture (16) pousse le piston auxiliaire (54) contre le couvercle (18) de la soupape.

5. Soupape selon l'une des revendications de 1 à 4, **caractérisée en ce que** le piston auxiliaire (54) avec jeu radial et axial est fixé au couvercle (18) de la soupape de façon à ce que le piston ait la liberté de mouvement nécessaire pour son autocentrage dans le perçage de guidage intérieur (52).

6. Soupape selon la revendication 5, **caractérisée en ce que** le piston auxiliaire (54) présente un épaulement (58) cylindrique encastré dans une chambre cylindrique (60) du couvercle (18) de la soupape de manière à avoir un jeu radial et dont le déplacement axial dans la chambre cylindrique (60) du couvercle (18) de la soupape est bloqué par une collerette (62).

7.  Soupape selon la revendication 6, **caractérisée en ce que** la collerette (62) est montée entre le couvercle (18) de la soupape et la gaine (12) de la soupape.

8.  Soupape selon l'une des revendications de 1 à 7, **caractérisée en ce que** le perçage de raccordement (64) aménagé dans le piston (14) de la soupape présente un taraudage pouvant accueillir un injecteur à visser.

9.  Soupape selon l'une des revendications de 1 à 8, **caractérisée en ce que** le rapport des surfaces

$$N = (A_S - A_A)/A_Y$$

est à peu près égal à trois ou supérieur à trois, étant entendu que $A_Y = A_D - A_C$.

EP 0 798 471 B1

FIG. 1

11

FIG. 2

FIG. 3

FIG. 4